# EUROPEAN PATENT APPLICATION

(11) **EP 1 679 171 A1**
(43) Date of publication of application: **12.07.2006**
(21) Application number: 05290054.5
(22) Date of filing: 10.01.2005
(51) Int. Cl.: B29C 43/30, B29D 31/00, B29C 70/64, E04F 15/10, D06N 7/00, B29B 9/04

(54) **Homogenous surface covering**

(71) Applicant: Tarkett SAS, 92000 Nanterre (FR)
(72) Inventor: Gustafsson, Peter, 37238 Ronney (SE)
(74) Representative: Kihn, Pierre Emile Joseph

(57) **Abstract**

The invention discloses a process for producing homogeneous type surface coverings comprising the following steps:
a) manufacturing a first sheet with an appropriate design,
b) cutting said sheet into flakes wherein at least 10 % of the flakes have a size of R > 30,
c) scattering the flakes thus obtained on a surface without any intermediate storage and
d) pressing the granules into a surface covering.

## Description

### Field of the Invention

The invention relates to a homogenous surface covering.

### Description of the-Related Art

Manufacturing of surface coverings by agglomerating polymer particles in a calandar or a press is well known in the art. The agglomerated particles or (also called granulates or flakes) can be of various sizes, depending on the final products thickness. However, the relation between length, width and height does usually not exceed 2 to 3 (R<2-3). In practice, the flakes are usually between 2 and 4 mm in size.

For the known agglomerated products, the flakes are manufactured ofline and then stored in an intermediate bulk storage. The flakes are transported by a pneumatic transport system to a scattering device, which is situated at the beginning of the press or the calandar. Pneumatic transport is however not possible for bigger flakes (R>7) because the pneumatic feeding lines clog up rather quickly. Furthermore, the scattering devices are not suitable scattering for bigger flakes regularly onto a surface.

If the size of the flakes exceeds 10 mm an even surface cannot be obtained; the surface presents a large number of small holes (pin holes). Pressures that must be used to obtain a correct surface is higher than 10 bars.

The design that can be obtained by the traditional small flakes is rather uniform since the pattern depends on the size of the flakes used to manufacture the surface covering.

Accordingly, there is a need for a surface covering being produced by agglomerating flakes having a broader variety of surface designs.

### SUMMARY OF THE INVENTION

In accordance with the present invention, a new process for producing a surface covering made by agglomerating flakes, a wider design variation is created.

Accordingly the invention provides a new and improved process for producing homogeneous type surface coverings comprising the following steps:
a) manufacturing a first sheet with an appropriate design, by mixing different colours and using both transparent and filled material.
b) cutting said sheet into flakes wherein at least 10 % of the flakes have a size of R > 30,
c) scattering the flakes thus obtained on a surface without any intermediate storage and
d) pressing the granules into a surface covering.

This process allows to obtain a surface covering having a much wider variety of surface design that the traditional type of homogenous surface coverings.

If the sheet in step b) is cut in
b1) 10-90 % of flakes having a size of R > 30 and
b2) 90-10 % of flakes having a size R of less than 20, preferably of less than 10 and most preferably of between 2 and 5, than a even wider variability of the design is obtained.

According to a preferred embodiment, flakes or powder having a diameter of less than 1.5. mm are added after scattering the flakes onto the surface and before pressing i.e. between steps b) and c). This allows to obtain a very smooth surface and to eliminate spots that may be formed when the big flakes are pressed in a double belt type press.

Preferably, maximum 20% of such very small flakes are used. Instead of using small flakes or together with the use of small flakes, the powder that has been obtained by sanding surface coverings may be used.

The process according to any of the preceding claims wherein a layer of between 0,1 mm and 0,4 mm is taken off the surface covering by sanding or by slicing.

The pressing of the granules into a surface covering is executed preferably in a belt type press or in a double belt type press.

The process may comprise the steps of finishing the surface covering in a traditional way. These steps depend on the final use for which the surface covering is destined.

The flakes and the resulting surface covering advantageously comprise PVC, PE.,PP,lonomers or rubber material such as SBRS , HSR ,NBR.

Depending on the use of the surface covering, it may comprise a top coating. This top coating comprises preferably a PU-dispersion , a PU-solution, a 2-components PU, a PU acrylate , an epoxy acrylate, a polyester acrylate, a polyether acrylate, a silicone acrylate or a mixture thereof

The top coating may comprise preferably an urethane derived polymer preferably polyurethane and most preferably a water based UV-curable PU-acrylate dispersion with a dry content of between 5% and 80% w/w preferably 20 and 60 % w/w. Such top coatings are widely used in the art for floor coverings.

The top coating normally has a thickness of between 0,5 µm to 100 µm.

The top coating may be applied by any known technique like roller coating, reverse and inreverse, spraying, curtain, screen etc.

### DETAILED DESCRIPTION OF A PREFERRED EMBODIMENTS

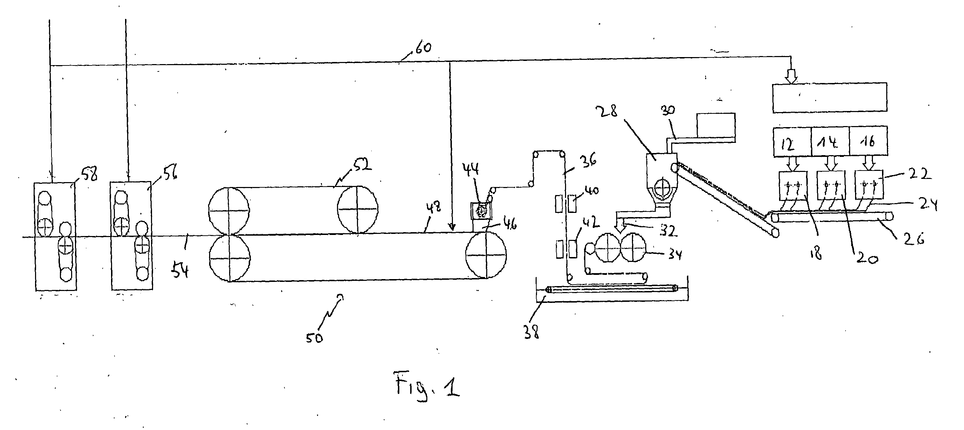

The present invention will be described in more detail in the following with reference to the enclosed figure 1, which represents a schematic view of the process.

Figure 1 represents a schematic view of the process according to a preferred embodiment of the invention.

Three different thermoplastic materials ,are dosed in a dosing equipment 12, 14, 16 and fed into an extruder 18, 20, 22 each and extruded. These thermoplastic materials are of different colours and/or of different physical properties. The extruded materials 24 are transported on a belt system 26 into a granulator 28 where they are granulated so as to form small granules of about 2-20 mm. A fourth material 30 may eventually be added at that stage. The granulated material 32 eventually together with the fourth material is fed into a calendar press 34 and is formed into a first sheet 36 of thermoplastic material. The first sheet 36 is cooled in a cooler 38 and then guided through to two different drying stations 40, 42 before it is fed into a flakes cutting device 44. The flakes cutting device 44 comprises a drum with cutting knives (not shown), which cut the sheet into flakes of different sizes. The flakes 46 are then spread evenly onto the lower belt 48 of a double belt press 50 and then pressed between the lower 48 and the upper belt 52 of the press 50 to form a second sheet 54. The second sheet 54 is fed into two subsequent sanding stations 56, 58 to smooth the surface of the sheet 54 and obtain a more regular design.

The sanding dust 60 may be fed into the extruder or at least part of it may be fed directly onto the lower belt 48 of the belt press 50 after the flakes 46 have been spread onto the lower belt 48.

## Claims

1. A process for producing homogeneous type surface coverings comprising the following steps:
a) manufacturing a first sheet with an appropriate design,
b) cutting said sheet into flakes wherein at least 10 % of the flakes have a size of R > 30,
c) scattering the flakes thus obtained on a surface without any intermediate storage and
d) pressing the granules into a surface covering.

2. The process according to claim 1 wherein the sheet in step b) is cut in
b1) 10-90 % of flakes having a size of R > 30 and
b2) 90-10 % of flakes having a size R of less than 20, preferably of less than 10 and most preferably of between 2 and 5.

3. The process according to claim 1 or 2, wherein flakes or powder having a diameter of less than 1.5 mm are added after scattering the flakes onto the surface or backside of the flakes all before pressing.

4. The process according to claim 3, wherein at least 5% of flakes having a diameter of less than 1.5 mm are added.

5. The process according to any of the preceding claims, wherein a layer of between 0,1 mm and 0,4 mm is taken off the surface covering by sanding or by slicing.

6. The process according to any of the preceding claims, wherein the pressing of the granules into a surface covering of step d) is executed in a belt type press.

7. The process according to any of the claims 1 to 4, wherein the pressing of the granules into a surface covering of step d) is executed in a double belt type press.

8. The process according to any of the preceding claims further comprising the steps of finishing the surface covering in a traditional way.

9. The surface covering according to any of the preceding claims, wherein the flakes comprise PVC, PE,PP ionomers or rubbers like SBR , HSR or NBR.

10. The surface covering according to any of the preceding claims, wherein the surface covering further comprises a the top coating comprising a PU-dispersion, a PU-solution, a 2-components PU, a PU acrylate, an epoxy acrylate, a polyester acrylate, a polyether acrylate, a silicone acrylate or a mixture thereof.

11. The surface covering according to any of the preceding claims, wherein the coating comprises an urethane derived polymer preferably polyurethane.

12. The surface covering according to any of the preceding claims, wherein the top coating has a thickness of between 0,5 µm to 100 µm
